# EUROPEAN PATENT APPLICATION

(11) **EP 1 965 384 A1**
(43) Date of publication of application: **03.09.2008**
(21) Application number: 07103289.0
(22) Date of filing: 01.03.2007
(51) Int. Cl.: G11B 20/10, G11B 20/12, G11B 20/18

(54) **Non-chronological AV-stream recording**

(71) Applicant: Deutsche Thomson OHG, 30625 Hannover (DE)
(72) Inventor: Winter, Marco, 30659 Hannover (DE)
(74) Representative: Rittner, Karsten

(57) **Abstract**

The invention relates to a method for storing of a sequence of data elements (200) in sequence of sectors (210) on a storage medium (10) and a corresponding method for reproducing a sequence of data elements (200) read from a sequence of sectors (210) on a storage medium (10).

Said method comprises as a first step writing a data element (de1, de2, de3, de4) to a sector (sel, se2, se3, se4, se5, se6) and as a second step storing said data element (de1, de2, de3, de4) intermediately. The method further comprises as a third step writing one or more subsequent data elements according (de2, de3, de4) to their order in the sequence to a contiguous sub-sequence of sectors wherein the sub-sequence is adjacent to said sector. In a detecting step, while executing the third step, it is detected whether said sector is defect. If so, said data element is rewritten to the other sector adjacent to said sub-sequence. Otherwise, a data element succeeding said data element is written to said other adjacent sector.

This avoids designation of a specific sector for defect management.

## Description

### Background

The invention relates to a method for storing a sequence of data elements in a sequence of sectors on a storage medium and a corresponding method for reproducing a sequence of data elements read from a sequence of sectors on a storage medium.

When storing a data element sequence in a sector sequence on a storage medium, like recording of an audio- and/or video-stream on an optical disk, like a CD, a DVD, a HD-DVD or a BD, or on a hard disk, it may occur that one or more of the data elements are written inaccurately, either because the respective sectors are defect or for other reasons. This results in a loss of quality.

In order to avoid the loss in quality related to the writing inaccuracies a defect management may be applied. A defect management requires some specific sectors scattered over the storage medium at regular distances to which data elements are rewritten if writing to the respective sector in the sequence was inaccurate.

Said defect management requires designating the specific sectors even if they remain empty or unused as no writing inaccuracy occurs.

Thus, there is a need for a quality preserving method of storing a data sequence in a sector sequence which exploits the functionally available storage space better.

### Invention

This is achieved by a method for storing a sequence of data elements in a sequence of sectors on a storage medium. Said method comprises the features of claim 1.

Said method comprises as a first step writing a data element to a sector and as a second step storing said data element intermediately. In a third step, the method comprises the step of writing one or more subsequent data elements according to their order in the sequence to a contiguous sub-sequence of sectors wherein the sub-sequence is adjacent to said sector. The method further comprises detecting, while executing the third step, whether said sector is defect and if so rewriting, said data element to the other sector adjacent to said sub-sequence. Otherwise a data element succeeding said data element is written to said other adjacent sector.

This avoids designation of specific sectors for defect management.

Preferably, the number of data elements written in the second step depends on the time required for detecting any writing inaccuracy. This limits the need for intermediate storage.

The need for intermediate storage is preferably limited in that said data element is rewritten as soon as any writing inaccuracy is detected.

In another preferred embodiment, the step of detecting whether said sector is defect further comprises detecting whether said sector, though currently intact, is expected to become defect in the future. If so, said data element is also rewritten to said other adjacent sector in order to avoid loss of data in the future.

A data element sequence written by said method for writing can be reproduced by a method for reproducing a sequence of data elements read from a sequence of sectors on a storage medium. Said method for reproducing comprises accessing a preceding sector and at least two subsequent sectors for reading. Said method further comprises reading of two or more data elements from the subsequent sectors. Read data elements are stored intermediately. The method also comprises the step of detecting whether said preceding sector is empty. The method further comprises reproducing at least a sub-sequence of said data element sequence by arranging the stored data elements in a different order than the reading order always if said preceding sector is detected as empty.

Preferably, when reproducing a data element sequence reading of data elements from subsequent sectors is continued until a rewritten data element is detected and read, wherein the step of reproducing the data element sequence comprises commencing said sub-sequence with said rewritten data element.

If each data element comprises an indication which indicates its position in the sequence of data elements a data element is preferably detected as rewritten by help of its indication.

It is preferred that the method for reproducing further comprises memorizing the indications of data elements comprised in other already reproduced sub-sequences and comparing the indication of said rewritten data element with said memorized indications. Then, said sub-sequence is only commenced with said rewritten data element if none of the memorized indication equals the indication of said rewritten data element.

In another preferred embodiment of the method for reproducing the step of detecting comprises detecting whether the subsequent sectors comprise a first empty or defect sector according to the reading order. If no empty or defect sector is detected, the step of reproducing the data element sequence comprises continuing reproduction, in accordance with the reading order, with all data elements read from subsequent sectors. Otherwise, the data element sequence is continued with data elements read from those subsequent sectors which precede the first empty or defect sector.

The invention also relates to an apparatus for storing a sequence of data elements to a sequence of sectors in a storage medium. Said apparatus comprises means for writing a data element to a sector and means for intermediate storage of the data element. Furthermore, the apparatus comprises means for detecting whether said sector is defect and means for controlling. Said means for controlling are adapted to determine, if said sector is detected as defect, said data element for rewriting to a subsequent sector and, otherwise, determine a subsequent data element for writing to said subsequent sector wherein said subsequent sector is not adjacent to said sector.

Preferably, the number of sectors between said sector and said subsequent sectors depends on the time required for detecting said sector as defect.

In another preferred embodiment, the means for detecting are adapted to detect whether said sector, though currently intact, is expected to become defect in the future. Additionally, the means for controlling are adapted to determine said data element also for rewriting to said other adjacent sector in order to avoid loss of data in the future if an expected future defect is detected.

The invention further relates to an apparatus for reproducing a sequence of data elements from a sequence of sectors on a storage medium. Said apparatus comprises means for accessing a sector for reading and means for reading a data element from an accessed sector. The apparatus further comprises an intermediate storage for storing read data elements and means for detecting whether an accessed sector is empty. Further comprised means for reproducing are adapted to reproduce at least a sub-sequence of said data element sequence by arranging the stored data elements in a different order than the reading order always if the signalling signals an empty sector.

Preferably, the reproducing means are adapted to detect whether a stored data element is a rewritten data element and the means for reproducing commence said sub-sequence with the rewritten data element.

### Drawings

Exemplary embodiments of the invention are illustrated in the drawings and are explained in more detail in the following description.

In the figures:
- Fig. 1: shows an exemplary embodiment of an apparatus for storing a sequence of data elements;
- Fig. 2: exemplarily shows a way of writing a sequence of data elements to a sequence of sectors;
- Fig. 3: exemplarily shows another way of writing a sequence of data elements to a sequence of sectors and
- Fig. 4: exemplarily shows reading a sequence of data elements from a sequence of sectors.

### Exemplary embodiments

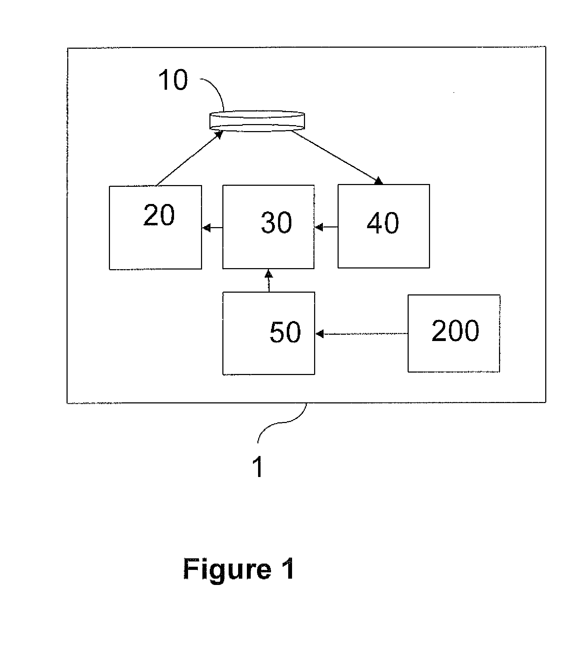

Figure 1 shows an exemplary embodiment of an apparatus for storing a sequence of data elements. The apparatus 1 comprises a sectored storage medium 10 and a writing device 20 for writing on the sectored storage medium 10. The sectors on the storage medium 10 are accessed by the writing device 20 in a sequence. The apparatus further comprises a controller 30, a detector 40 and a memory 50. A stream or sequence of data elements 200 is buffer stored in the memory 50. The stream 200 may be generated inside the apparatus 1 or transmitted to the apparatus 1 from another component. The controller 30 determines a data element in the memory 50 for writing; reads it from the memory 50 and controls writing of the determined data element by the writing device 20. The detector 40 is adapted to detect writing inaccuracies and/or defect sectors in the storage medium 10. The detector 40 signals the controller 30 any writing inaccuracy. The controller 30 and the detector 40 may be realised in a single component which avoids signalling.

The writing device 20 itself may be adapted to detect whether the sector to-be-written-to next is defect and/or whether the last data element written was written accurate. Then, if the writing device 20 is also adapted to generate a corresponding feedback, the detector 40 may be omitted and the controller 30 may receive the corresponding feedback from the writing device 20.

In case of a writing inaccuracy and in response to reception of a corresponding feedback by the writing device 20 or upon appropriate signalling by the detector 40, the controller 30 determines the respective data element for rewriting. Therefore, any data element written is kept at least as long in the memory 50 as needed for detecting any writing inaccuracy in the respective sector.

The detector 40 or the writing device 20 may also be adapted to detect a sector as being endangered to become defect in the future. Then, the detector 40 may signal the controller 30 this danger as well wherein the controller 30 may determine the respective data element for rewriting upon such signalling.

If the writing device 20 is also adapted to read the storage medium 10 or if the apparatus comprises a reading device instead of the writing device 20, the apparatus 1 may be adapted for reproducing a sequence of data elements from the storage medium 10. Reproducing a data element sequence will be described more detailed below.

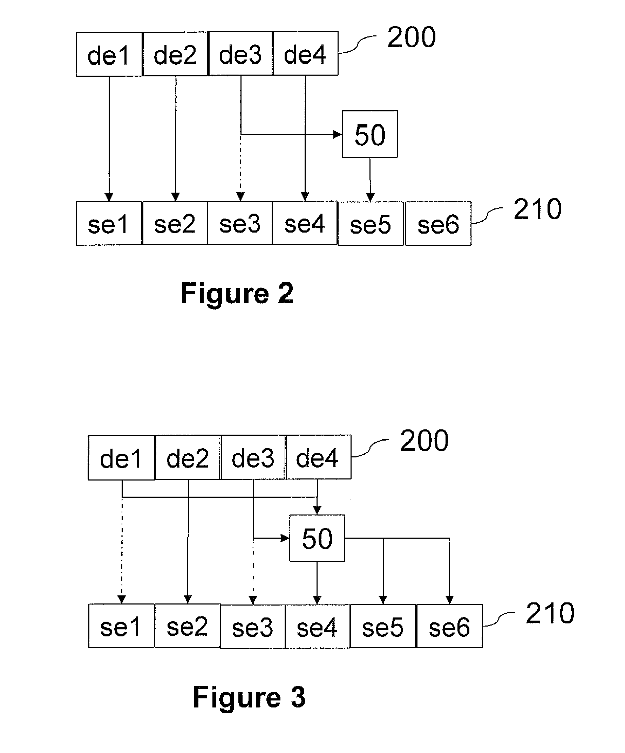

Figure 2 shows an exemplary data sequence 200 which is written to an exemplary sector sequence 210. First, a first data element de1 is stored in a first sector se1 and a second data element is stored in a second sector se2. Then, it was attempted to write a third data element de3 to a third sector se3, which is defect. While writing a fourth data element de4 to a fourth sector se4, it is detected that the third data element de3 was written inaccurately. Therefore, the third data element de3 is rewritten to a fifth sector se5.

Within the figure 2 only the intermediate storage of data element de3 in buffer 50 is depicted. But the other data elements de1, de2 and de4 are buffered also at least until it is detected that they were written correctly.

Figure 3 shows another exemplary way of writing of the data sequence 200 to the sector sequence 210. Again, a first data element de1 is stored in a first sector se1 and a second data element is stored in a second sector se2.

This time, the first sector de1 is detected as expected to become defect in the future while the third data element de3 is written to the third sector se3. But as in figure 2, writing to the third sector se3 fails as well due to a defect in the third sector 213. Then, the expected defect in the first sector se1 is detected. Therefore, data element de1 is rewritten to the fourth sector se4. The fourth data element de4 is buffered in memory 50 before it is written to the fifth sector se5. Then the defect in the third sector se3 is detected and the third data element de3 is retrieved from the buffer 50 and rewritten to the sixth sector se6.

Again, only the intermediate storage of data element de1, de3 and d4 in buffer 50 is depicted. But the second data element de2 is buffered also at least until it is detected that it was written correctly.

In another exemplary embodiment writing a data element to a sector comprises writing an indication like a logical sector number, a frame number or another sign reflecting the position of said data element in the data element sequence.

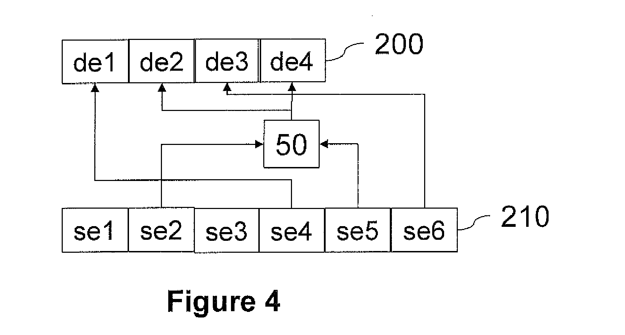

Figure 4 illustrates reproducing a data element sequence 200. At the beginning, sector se1 is accessed and detected as defect. Therefore, the data element read from sector se2 is stored in buffer 50. When attempting to read sector se3 another defect is detected. This is a first defect sector in the subsequence of sectors se2, se3 succeeding the defect sector se1. Reading continues by reading the data element stored in sector se4. The data element read from sector se4 is detected as rewritten. Therefore, the sequence of data elements 200 is reproduced by commencing it with the data element read from sector se4. The sequence of data elements 200 is continued with the data element read from sector se2 which is retrieved from the buffer 50.

Then reproduction is halted until another rewritten data element read from sector se6 is detected. The data element de4 read meanwhile from sector se5 is buffered in the buffer 50. After reading the other rewritten data element from sector se6, reproduction of the data element sequence is continued by commencing a subsequence of it with said other rewritten data element from sector se6 and continuing said subsequence retrieving from the buffer data element de4 which was read from sector se5.

It should be noted that any data element might be buffered inclusively the data elements detected as rewritten. If all data elements are buffered, the data element sequence might be reproduced by arranging the data elements in the buffer. Another way of reproduction is achieved by transmitting single data elements or sequences of data elements to another apparatus for further processing.

In another exemplary embodiment reading data elements comprises reading an indication comprised in the data element. Said indication may be logical sector numbers, frame numbers or other signs reflecting the order of the data element sequence. A rewritten data element may be detected by help of said indication.

In another exemplary embodiment sector se1 is not defect but was expected to become defect in the future while writing the data element sequence. But, while reproducing the data element sequence sector se1 is still intact. Then, for reproducing the data element sequence the respective data element de1 can be read from sector se1 and reproduction of the data element sequence need not to be halted. Instead, when reading the respective rewritten data element, it is omitted from reproduction.

## Claims

1. Method for storing a sequence of data elements (200) to a sequence of sectors (210) on a storage medium (10) wherein the method comprises
- a) writing a data element (de1, de2, de3, de4) to a sector (se1, se2, se3, se4, se5, se6);
- b) storing said data element (de1, de2, de3, de4) intermediately;
- c) writing one or more subsequent data elements according (de2, de3, de4) to their order in the sequence to a contiguous sub-sequence of sectors wherein the sub-sequence is adjacent to said sector;
- d) detecting, while executing step c), whether said sector is defect and if so, rewriting, said data element to the other sector adjacent to said sub-sequence and, otherwise, writing a data element succeeding said data element to said other adjacent sector.

2. Method according to claim 1 wherein
- the number of data elements written in step c) depends on the time required for detecting any writing inaccuracy.

3. Method according to claim 2 wherein
- said data element is rewritten as soon as any writing inaccuracy is detected.

4. Method for reproducing a sequence of data elements (200) read from a sequence of sectors (211) on a storage medium (10), wherein the method comprises
- accessing a preceding sector (se1, se3) and at least two subsequent sectors (se2, se3, se4, se5, se6) for reading,
- reading two or more data elements from the subsequent sectors,
- storing read data elements intermediately,
- detecting whether said preceding sector is empty and
- reproducing at least a sub-sequence of said data element sequence by arranging the stored data elements in a different order than the reading order always if said preceding sector is detected as empty.

5. Method according to claim 4, wherein
- reading of data elements is continued until a rewritten data element is detected and read and
- reproducing said sub-sequence comprises commencing said sub-sequence with said rewritten data element.

6. Method according to claim 4 or 5, wherein
- detecting comprises detecting whether the subsequent sectors comprise a first empty or defect sector (se1, se3) according to the reading order and
- reproducing said sub-sequence comprises continuing reproduction, in accordance with the reading order,
- with all data elements read, if no empty or defect sector (se1, se3) was detected, and
- with data elements read from sectors preceding the first empty or defect sector (se1, se3), otherwise.

7. Apparatus (1) for storing a sequence of data elements (200) to a sequence of sectors (210) in a storage medium (10), the apparatus (1) comprising
- means for writing (20) a data element (de1, de2, de3, de4) to a sector (se1, se2, se3, se4, se5, se6);
- means for intermediate storage (50) of the data element (de1, de2, de3, de4);
- means for detecting (40) whether said sector (se1, se2, se3, se4, se5, se6) is defect;
- means for controlling (30) adapted to determine, if said sector is detected as defect, said data element (de1, de3) for rewriting to a subsequent sector and, otherwise, determine a subsequent data element for writing to said subsequent sector (se4, se6) wherein
- said subsequent sector (se4, se6) is not adjacent to said sector.

8. Apparatus according to claim 7, wherein
- the number of sectors between said sector and said subsequent sectors depends on the time required for detecting said sector as defect.

9. Apparatus (1) for reproducing a sequence of data elements (200) from a sequence of sectors (210) on a storage medium (10), wherein the apparatus (1) comprises
- means for accessing (20) a sector (se1, se2, se3, se4, se5, se6);
- means for reading (20) a data element (de1, de2, de3, de4) from an accessed sector (se1, se2, se3, se4, se5, se6);
- an intermediate storage (50) for storing read data elements (de1, de2, de3, de4);
- means for detecting (40) whether an accessed sector (se1, se2, se3, se4, se5, se6) is empty;
- means for reproducing (30) adapted to reproduce at least a sub-sequence of said data element sequence by arranging the stored data elements in a different order than the reading order always if said sector is detected as empty.

10. Apparatus according to claim 9, further comprising
- the reproducing means are adapted to detect whether a stored data element is a rewritten data element and
- the means for reproducing (200) commence said sub-sequence with the rewritten data element.
